# EUROPÄISCHE PATENTSCHRIFT

(11) **EP 1 502 497 B1**
(45) Veröffentlichungstag und Bekanntmachung des Hinweises auf die Patenterteilung: **26.08.2009**
(21) Anmeldenummer: 04017572.1
(22) Anmeldetag: 24.07.2004
(51) Int. Cl.: A01F 15/08

(54) **Vorrichtung zum Umhüllen oder Verpacken von insbesondere landwirtschaftlichen Erntegutballen**
Device for wrapping or packing in particular bales of harvested material
Appareil pour emballer en particulier des balles agricoles

(30) Priorität: 30.07.2003 DE 10334680
(43) Veröffentlichungstag der Anmeldung: 02.02.2005
(73) Patentinhaber: Maschinenfabrik Bernard Krone GmbH, 48480 Spelle (DE)
(72) Erfinder: Krone, Bernard, Dr., 48480 Spelle (DE); Schulz, Stephan, 48369 Saerbeck (DE)

(56) Entgegenhaltungen:
- EP-A- 0 543 145
- DE-A- 1 507 252
- US-A- 2 722 096
- US-A- 2 833 108

## Beschreibung

Die Erfindung betrifft eine Vorrichtung zum Umhüllen oder Verpacken von insbesondere landwirtschaftlichen Erntegutballen mit einer Wickeleinheit und einem dieser zugeordneten Wickeltischeinrichtung zur Aufnahme des Erntegutballens und einem in seiner Betriebsstellung in Fahrtrichtung nachgeordneten Ableger zur Ablage der Erntegutballen auf ihrer Stirnseite.

Bekannt ist beispielsweise aus der EP 0 543 145 B1 ein Rundballenwickelgerät, welches eine Abladekippvorrichtung mittig oder seitlich hinter dem Fahrzeugrahmen höhenverschwenkbar angehangen hat, bei der wiederum ein seitenverschwenkbares, mit einer solch schrägliegenden Auftrefffläche für den aus dem Rundballenwickelgerät fallenden Rundballen versehenes Leitstück aufweist, das der Rundballen beim Fall aus seiner waagerechten Wickellage in eine senkrechte Lage umgelenkt wird. Wahlweise ist auch möglich, dass die Abladekippvorrichtung seitenverschwenkbar angehangen ist.

Hierbei ist es von Nachteil, dass die Abladekippvorrichtung angehangen ist. Dieses bedeutet, dass zum einen die Gesamtmaschinenlänge vergrößert wird, zum anderen, dass sich bei einer beladenen Maschine Rangierfahrten kompliziert und schwierig darstellen. Weiterhin ist es dann, wenn die Abladekippvorrichtung nicht benutzt werden soll, erforderlich, die Abladekippvorrichtung mit zusätzlichem Arbeitsaufwand vom Fahrzeugrahmen abzuhängen oder zu demontieren.

Es ist Aufgabe der vorliegenden Erfindung, eine Vorrichtung zum Umhüllen oder Verpacken von landwirtschaftlichern Erntegutballen zu schaffen, die die soeben beschriebenen Probleme vermeidet.

Gelöst wird diese Aufgabe durch eine Vorrichtung nach Anspruch 1. Die erfindungsgemäße Vorrichtung nach den Merkmalen des Anspruchs 1 zeichnet sich durch einen Ableger aus, der an einer Wickeltischeinrichtung angeordnet ist und aus einer im wesentlichen parallel zur Fahrtrichtung der Vorrichtung befindlichen Betriebstellung in eine Außerbetriebsstellung im wesentlichen quer zur Fahrtrichtung verschwenkbar oder komplett unter den Wickeltisch in Fahrtrichtung translatorisch einziehbar ist. Diese Außerbetriebsstellung des Ablegers zeichnet sich dadurch aus, dass der Ableger in Bezug zur Wickeltischeinrichtung in eine solche Lage verbracht wird, in der eine beschädigungsfreie Ablage der eingewickelten Erntegutballen erreichbar ist, wenn eine Ablage der Erntegutballen auf ihrer Stirnseite nicht gewünscht wird. Das bedeutet für den Bediener der erfindungsgemäßen Vorrichtung, dass in einem solchen Fall die aufwendigen Umbauarbeiten entfallen und dadurch eine wirtschaftlichere Nutzung ermöglicht wird.

Da bei einer schwenkbaren Wickeltischeinrichtung der Ableger direkt an dieser befestigt ist und ein auf der Wickeltischeinrichtung befindlicher Ballen durch eine Kippbewegung von dieser abgelegt wird, wird der Ableger selbst durch die Kippbewegung des Wickeltisches verschwenkt. Bei in etwa horizontaler Betriebsstellung der Wickeltischeinrichtung befindet sich der Ableger so in einer Stellung ohne Bodenkontakt. Der Ableger hat daher nur bei der Ablage des Erntegutballens Bodenkontakt und ist somit deutlich weniger verschleißanfällig.

Gemäß einem weiteren vorteilhaften Aspekt der Erfindung ist der Ableger aus einer im wesentlichen parallel zur Fahrtrichtung der Vorrichtung befindlichen Betriebsstellung in eine im wesentlichen quer zur Fahrtrichtung ausgerichteten Außerbetriebsstellung verschwenkbar. Dieses geht mit einer erheblichen Längenverkürzung der Vorrichtung einher und dient somit der besseren Übersichtlichkeit und damit auch einer erhöhten Verkehrssicherheit der Maschine.

Bei einer weiteren vorteilhaften Ausbildung einer Vorrichtung gemäß der Erfindung ist der Ableger am Wickeltisch beweglich befestigt und um eine quer zur vertikalen Längsmittelebene der Vorrichtung stehende Achse verschwenkbar. Somit ist der Ableger an verschieden hohe Wickeltische der Wickeltischeinrichtung anpassbar.

Hierbei ist es auch denkbar, dass der Ableger bei Überführung der Vorrichtung in ihre Transportstellung automatisch in seine Außerbetriebsstellung verschwenkbar gehalten ist. Hierfür notwendige Stell- und Steuermittel sind dem Stand der Technik zu entnehmen. Bei der automatischen Verschwenkung des Ablegers werden dem Bedienpersonal der Vorrichtung verschiedene Arbeitsschritte abgenommen und somit die Bedienung der Vorrichtung erleichtert.

Weitere Vorteile der Erfindung ergeben sich aus den weiteren Unteransprüchen und den in den Zeichnungen schematisch dargestellten Ausführungsbeispielen. In den Zeichnungen zeigt:
- Fig. 1: Ein Ausführungsbeispiel einer Vorrichtung zum Umhüllen oder Verpacken von landwirtschaftlichem Erntegutballen in Gestalt einer kombinierten Presswickelvorrichtung während des Umwickelns eines Ballens,
- Fig. 2: die Vorrichtung nach Fig. 1 während des Ablegens des Ballens,
- Fig. 3: eine perspektivische Ansicht eines Teils der Wickeltischeinrichtung der Vorrichtung nach Fig. 1 mit daran angeordnetem Ableger in Betriebsstellung,
- Fig. 4: eine Ansicht eines Teils der Wickeltischeinrichtung der Vorrichtung nach Fig. 1 mit daran angeordnetem Ableger in Außerbetriebstellung.

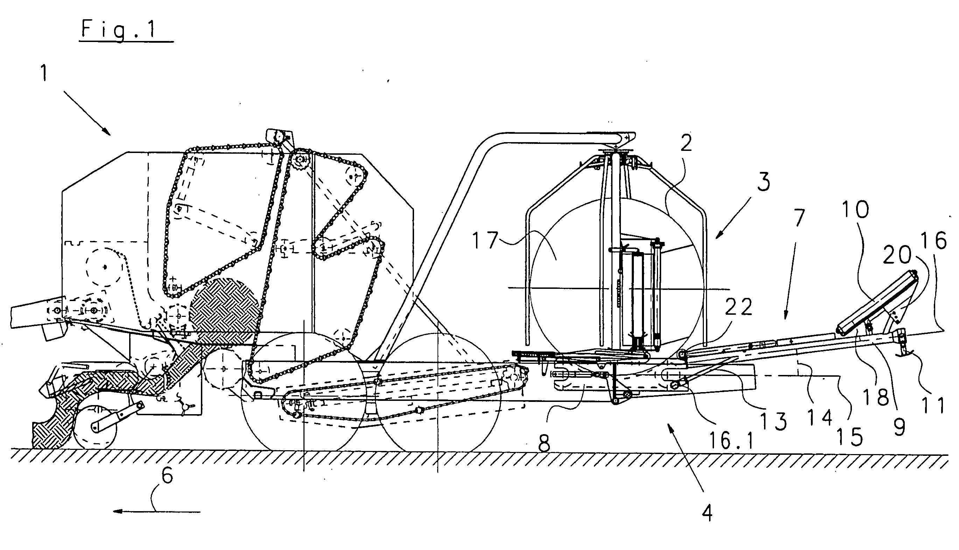

Bei der in Fig. 1 dargestellten Vorrichtung 1 zum Umhüllen oder Verpacken von insbesondere landwirtschaftlichem Erntegutballen 2 handelt es sich um eine kombinierte Presswickelvorrichtung. In einer Wickeleinheit 3 wird der auf einer Wickeltischeinrichtung 4 befindliche und aus gepressten Erntegut, wie Heu, Stroh oder angewelktem Grüngut bestehende Erntegutballen 2 mit Verpackungsmaterial umwickelt. Der in Fahrtrichtung 6 nachgeordnete Ableger 7 ist direkt an dem zu der Wickeltischeinrichtung 4 gehörenden Wickeltisch 8 beweglich befestigt.

Bei diesem Ausführungsbeispiel gemäß der Erfindung weist der Ableger 7 einen zentralen Balken 9, einen Richtungsablenker 10, ein Stützelement 11 und Mittel 12 zum Arretieren des Ablegers 7 in einer Außerbetriebstellung auf. Ein Kraftspeicher 13, der zwischen dem Ableger 7 und dem Wickeltisch 8 angeordnet ist, ist in diesem Fall als Strebe mit einem Gummifederelement ausgebildet. Während des Betriebs der Vorrichtung 1 sorgt der Kraftspeicher 13 während des Wickelvorgangs (Fig. 1) dafür, dass der Ableger 7 mit seinem Stützelement 11 nicht den Erdboden berührt. Ein Winkel 14 zwischen einer Horizontalen 15 des Wickeltisches 8 und einer Längsachse 16 ist in diesem Fall minimal (Fig. 1). Das Bedienpersonal der Vorrichtung 1 ist somit in der Lage, mit dieser zu fahren und zu rangieren, ohne auf möglicherweise nachlaufende und angehängte Ableger achten zu müssen. Die für den soeben beschriebenen Vorgang notwendige Relativbeweglichkeit des Kraftspeichers 13 gegenüber dem Wickeltisch 8 und dem Ableger 7 wird in diesem Beispiel durch eine Schwenkachse 16.1 und ein Gelenk 16.2 realisiert.

Die Längsachse 16, die bei diesem Ausführungsbeispiel auch innerhalb des zentralen Balkens 9 verläuft, ist bei anderen Ausführungsformen durch die generelle Ausrichtung des Ablegers 7, bzw. zwischen einem Anordnungspunkt an der Wickeltischeinrichtung 4 und einer Aufhängung eines Stützelements 11 gegeben.

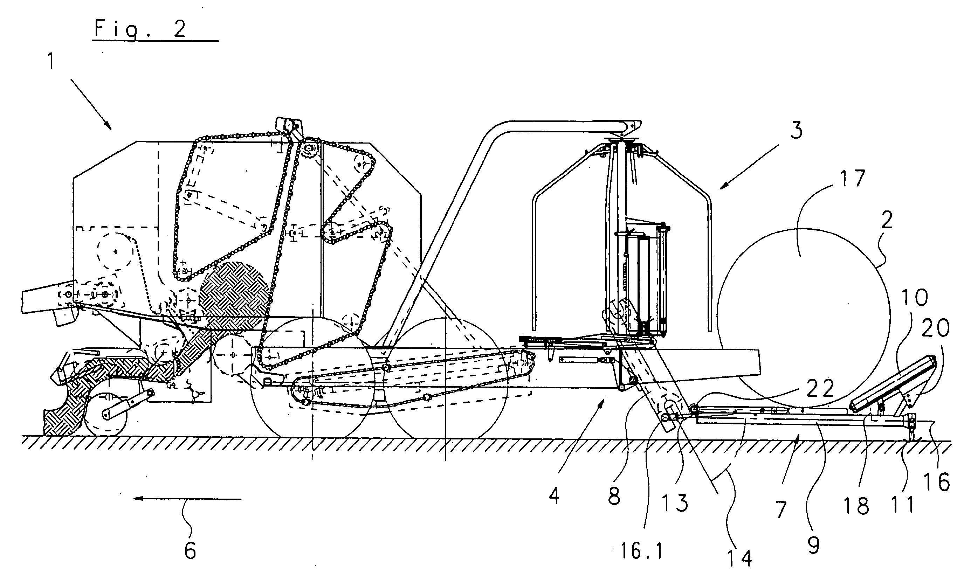

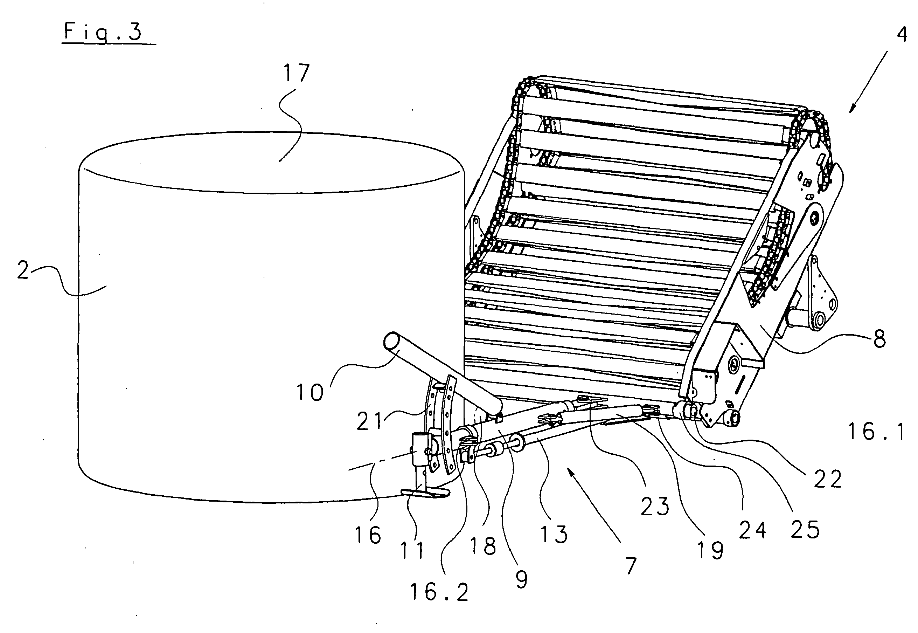

Während des in Fig. 2 dargestellten Ablegevorgangs des eingewickelten Erntegutballens 2 ist der Winkel 14 zwischen der Horizontalen 15 und der Längsachse 16 je nach Neigung des Wickeltisches 8 maximal. Bei der Schrägstellung des Wickeltisches 8 rollt der Erntegutballen 2 aufgrund der Schwerkraftwirkung in Richtung Ableger 7, wird letztlich durch den Richtungsablenker 10 aus seiner entgegen der Fahrtrichtung 6 gerichteten Rollbahn gebracht und fällt auf eine seiner Stirnseiten 17 (Fig. 3). Je nach Bedarf ist es hierbei denkbar, dass sowohl die Neigung des Wickeltisches als auch der Winkel 18 zwischen Richtungsablenker 10 und zentralem Balken 9 veränderlich sind und beispielsweise an die Größe des Erntegutballens 2 angepasst werden können.

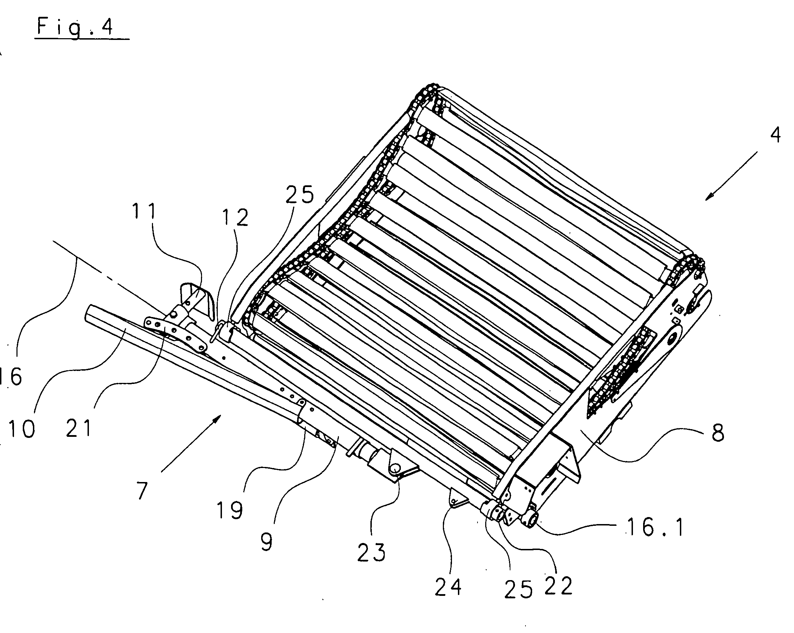

Ein weiterer Vorteil des veränderbaren Winkels 18 wird in Fig. 4 deutlich, in der der Ableger 7 in seiner Außerbetriebsstellung zu sehen ist. Hier sind zumindest Teile des Ablegers 7 nach dem Lösen bzw. Umschwenken eines Stützgliedes 19 um eine in etwa in der Längsmittelachse des zentralen Balkens 9 liegende Schwenkachse, die der Längsachse 16 des Ablegers 7 entspricht, gedreht worden, womit das Stützelement 11 nun mit der in der Betriebsstellung zum Boden weisenden Seite in Fahrtrichtung 6 zeigt. Der veränderbare Winkel 18 ist in diesem Fall minimiert, so dass der gesamte Ableger 7 in der Außerbetriebstellung der Vorrichtung 1 nur noch zu einem sehr geringen Maß der Wickeltischeinrichtung 4 nachgeordnet ist. Der Kraftspeicher 13 wird auf ähnliche Art wie das Stützglied 19 von dem Ableger 7 getrennt und befindet sich in Fig. 4 nicht sichtbar unterhalb des Wickeltisches 8. Der Kraftspeicher 13 ist ähnlich wie der Ableger 7 mit einem einfachen Mittel 12 an der Wickeltischeinrichtung 4 arretiert. Somit wurde durch die Minimierung des Winkels 18 mittels eines der dargestellten Stellmittel 20 oder 21 die Längserstreckung der Vorrichtung 1 minimiert.

Während bei diesem Ausführungsbeispiel der Erfindung die Verschwenkung aus einer Betriebsstellung (Fig. 1, 2) in eine Außerbetriebsstellung (Fig. 4) des Ablegers 7 manuell zu betätigen ist, versteht es sich von selbst, dass die Überführung des Ablegers 7 in die verschiedenen Positionen auch durch Stellmittel, wie beispielsweise doppelt wirkende Hydrozylinder, erfolgen kann. Auch ist denkbar, die Überführung des Ablegers 7 in seine Außerbetriebsstellung mittels einer nicht näher dargestellten Steuerungsvorrichtung automatisch an das In-die-Transportstellung-Bringen der Vorrichtung 1 zu koppeln, so dass ein leichteres Bedienen der Vorrichtung 1 ermöglicht wird.

Statt eines Verschwenkens des Ablegers 7 um die im zentralen Balken 9 liegende Achse ist es auch denkbar, das Stützelement 11 teleskopierbar auszuführen. So wird dann für das Stützelement 11 bei der Überführung des Ablegers 7 in die im wesentlichen quer zur Fahrtrichtung 6 liegende Außerbetriebsstellung ein hinreichender Abstand zwischen dem Ableger 7 und dem Untergrund gewährleistet.

Statt der hier dargestellten Verschwenkung des Ablegers 7 ist es auch denkbar, diesen komplett über eine nicht näher dargestellte Vorrichtung beispielsweise unter den Wickeltisch 8 in Fahrtrichtung 6 translatorisch einzuziehen. Somit wäre ebenfalls die Übersichtlichkeit der Wickeleinheit 3 mit dem Ableger 7 verbessert. Da der Wickeltisch 8 in Transportstellung der Vorrichtung 1 bevorzugt in einer nicht abgesenkten Position ist, ist auch in diesem Fall ein genügend großer Bodenabstand gewährleistet.

Es versteht sich schließlich auch, dass die quer zur nicht näher bezeichneten vertikalen Längsmittelebene der Vorrichtung 1 stehende Schwenkachse 22 mit dem dazugehörigen Gelenken 23 und 24, die sich über die Gesamtbreite des Wickeltisches 8 erstreckt und mit Hilfe der Aufhängungen 25 an diesem befestigt ist, auch durch andere schwenkbare Gelenke realisierbar ist.

## Patentansprüche

1. Vorrichtung zum Umhüllen oder Verpacken von insbesondere landwirtschaftlichen Erntegutballen (2), mit einer Wickeleinheit (3) und einer dieser zugeordneten Wickeltischeinrichtung (4) zur Aufnahme des Erntegutballens (2) und einem in seiner Betriebsstellung in Fahrtrichtung nachgeordneten Ableger (7) zur Ablage des Erntegutballens (2) auf seiner Stirnfläche (17), **dadurch gekennzeichnet, daß** der Ableger (7) an der Wickeltischeinrichtung (4) angeordnet ist und aus einer im wesentlichen parallel zur Fahrtrichtung (6) der Vorrichtung (1) befindlichen Betriebstellung in eine Außerbetriebsstellung im wesentlichen quer zur Fahrtrichtung (6) verschwenkbar oder dass der Ableger (7) komplett unter den Wickeltisch (8) in Fahrtrichtung (6) translatorisch einziehbar ist.

2. Vorrichtung (1) nach Anspruch 1, **dadurch gekennzeichnet, dass** der Ableger (7) am Wickeltisch (8) der Wickeltischeinrichtung beweglich befestigt und um eine quer zur vertikalen Längsmittelebene der Vorrichtung (1) bestehende Achse (22) schwenkbar ist.

3. Vorrichtung (1) nach einem der Ansprüche 1 oder 2, **dadurch gekennzeichnet, dass** ein zwischen Ableger (7) und Wickeltisch (8) angeordneter und den Ableger (7) beweglich abstützender Kraftspeicher (13) einen Winkel (14) zwischen einer Horizontalen (15) des Wickeltisches (8) und einer Längsachse (16) des Ablegers (7) sowohl maximal als auch minimal begrenzt.

4. Vorrichtung (1) nach einem der Ansprüche 1 bis 3, **dadurch gekennzeichnet, dass** der Ableger (7) mithilfe eines Stellgliedes um zumindest eine Achse quer zur Fahrtrichtung (6) der Vorrichtung schwenkbar ist.

5. Vorrichtung (1) nach Anspruch 1, **dadurch gekennzeichnet, dass** der Ableger (7) bei Überführung der Vorrichtung (1) in ihre Transportstellung automatisch steuerbar in seine Außerbetriebsstellung seitenverschwenkbar ist.

6. Vorrichtung (1) nach einem der Ansprüche 1 bis 5, **dadurch gekennzeichnet, dass** der Ableger (7) zumindest teilweise automatisch steuerbar höhenverschwenkbar ist.

7. Vorrichtung (1) nach einem der Ansprüche 1 bis 6, **dadurch gekennzeichnet, dass d**er Ableger (7) einen zentralen Balken (9) und einen Richtungsablenker (10) aufweist, wobei dieser in der Betriebsstellung oberhalb des zentralen Balkens (9) und in einem veränderbaren Winkel (18) zu diesem angeordnet ist.

8. Vorrichtung (1) nach einem der Ansprüche 1 bis 7, **dadurch gekennzeichnet, dass** der Ableger (7) ein Stützelement (11) aufweist, welches nur in der Erntegutablagestellung des Ablegers (7) den Untergrund berührt.

9. Vorrichtung (1) nach Anspruch 8, **dadurch gekennzeichnet, dass** das Stützelement (11) teleskopierbar ist.

10. Vorrichtung (1) nach einem der Ansprüche 8 oder 9, **dadurch gekennzeichnet, dass** zumindest ein das Stützelement (11) aufweisender Teil des Ablegers (7) um eine Längsachse (16) des Auslegers (7) drehbar und anschließen arretierbar ist.

## Claims

1. Device for wrapping or packing in particular bales (2) of harvested agricultural material, having a winding unit (3) and a winding table arrangement (4) associated therewith to receive the bale (2) of harvested material, and having a depositor (7) for depositing the bale (2) of harvested material on its end-face (17), which depositor (7) is positioned downstream in the direction of travel in its operating position, **characterised in that** the depositor (7) is arranged on the winding table arrangement (4) and can be pivoted from an operating position situated substantially parallel to the direction of the travel (6) of the device (1) to an inoperative position substantially transverse to the direction of travel (6), or **in that** the depositor (7) can be completely drawn in, in translation, below the winding table (8) in the direction of travel (6).

2. Device (1) according to claim 1, **characterised in that** the depositor (7) is fastened to the winding table (8) of the winding table arrangement in such a way as to be movable and is pivotable about a shaft (22) which is transverse to the vertical longitudinal centre plane of the device (1).

3. Device (1) according to either of claims 1 and 2, **characterised in that** a force-storing means (13), which is arranged between the depositor (7) and the winding table (8) and which supports the depositor (7) in such a way that the latter is movable, sets both a maximum and a minimum limit for an angle (14) between a horizontal (15) of the winding table (8) and a longitudinal axis (16) of the depositor (7).

4. Device (1) according to one of claims 1 to 3, **characterised in that** the depositor (7) can be pivoted by means of a positioner about at least one axis transverse to the direction of travel (6) of the device.

5. Device (1) according to claim 1, **characterised in that,** when the device (1) is transferred to its position for transport, the depositor (7) can be pivoted to the side to its inoperative position automatically and controllably.

6. Device (1) according to one of claims 1 to 5, **characterised in that** the depositor (7) can be at least partly pivoted vertically, automatically and controllably.

7. Device (1) according to one of claims 1 to 6, **characterised in that** the depositor (7) has a central bar (9) and a direction changer (10), the latter being arranged, in the operating position, above the central bar (9) and at a variable angle (18) thereto.

8. Device (1) according to one of claims 1 to 7, **characterised in that** the depositor (7) has a supporting member (11) which touches the ground only when the depositor (7) is in the position for depositing harvested material.

9. Device (1) according to claim 8, **characterised in that** the supporting member (11) is telescopable.

10. Device (1) according to either of claims 8 and 9, **characterised in that** at least a part of the depositor (7) which has the supporting member (11) can be rotated about the longitudinal axis (16) of the depositor (7) and can then be locked.

## Revendications

1. Dispositif pour entourer ou envelopper notamment des balles de produits agricoles récoltés (2), comportant une unité d'enroulement (3) et une installation à plateau d'enroulement (4) associée à celle-ci pour recevoir la balle de produits agricoles (2), et un dispositif de dépose (7) qui, en position de fonctionnement, est en aval de l'installation à plateau dans la direction de déplacement, pour la dépose de la balle de produits agricoles (2) sur sa face frontale (17),
**caractérisé en ce que**
le dispositif de dépose (7) est monté sur l'installation d'enroulement (4) et peut être basculé à partir de sa position de fonctionnement pratiquement parallèle à la direction de déplacement (6) du dispositif (1) dans une position hors service essentiellement dans la direction transversale à la direction de déplacement (6) ou ce dispositif de dépose (7) peut être rétracté complètement sous le plateau d'enroulement (8) par translation dans la direction de déplacement (6).

2. Dispositif (1) selon la revendication 1,
**caractérisé en ce que**
le dispositif de dépose (7) est fixé de manière mobile au plateau d'enroulement (8) de l'installation et peut pivoter autour d'un axe (22) transversal au plan médian longitudinal vertical du dispositif (1).

3. Dispositif (1) selon la revendication 1 ou 2,
**caractérisé par**
un accumulateur de force (13) installé entre le dispositif de dépose (7) et le plateau d'enroulement (8) et qui soutient de manière mobile le dispositif de dépose (7), limite l'angle (14) entre la direction horizontale (15) du plateau d'enroulement (8) et l'axe longitudinal (16) du dispositif de dépose (7) en limitant à la fois le maximum et le minimum de cet angle.

4. Dispositif (1) selon les revendications 1 à 3,
**caractérisé en ce que**
le dispositif de dépose (7) peut pivoter à l'aide d'un organe d'actionnement autour d'au moins un axe transversal à la direction de déplacement (6) du dispositif.

5. Dispositif (1) selon la revendication 1,
**caractérisé en ce que**
lorsque le dispositif (1) est mis en position de transport, le dispositif de dépose (7) est commandé automatiquement pour pivoter latéralement dans sa position hors service.

6. Dispositif (1) selon les revendications 1 à 5,
**caractérisé en ce que**
le dispositif de dépose (7) peut basculer en hauteur, de façon commandée au moins en partie automatiquement.

7. Dispositif (1) selon les revendications 1 à 6,
**caractérisé en ce que**
le dispositif de dépose (7) comporte une poutre centrale (9) et un déflecteur (10), ce dernier étant installé en position de fonctionnement au-dessus de la poutre centrale (9) et selon un angle (18) variable par rapport à celle-ci.

8. Dispositif (1) selon les revendications 1 à 7,
**caractérisé en ce que**
le dispositif de dépose (7) comporte un élément d'appui (11) qui ne touche le sol que lorsque le dispositif de dépose (7) est en position de dépose du produit récolté.

9. Dispositif (1) selon la revendication 8,
**caractérisé en ce que**
l'élément d'appui (11) est télescopique.

10. Dispositif (1) selon la revendication 8 ou 9,
**caractérisé en ce qu'**
au moins une partie du dispositif de dépose (7) qui comporte l'élément d'appui (11) peut être tournée autour d'un axe longitudinal (16) du dispositif de dépose (7) pour être ensuite bloquée.
